Europäisches Patentamt

European Patent Office

Office européen des brevets

(11) Publication number: **0 322 377**
**A1**

## EUROPEAN PATENT APPLICATION

(21) Application number: **88830549.7**

(22) Date of filing: **21.12.88**

(51) Int. Cl.⁴: **A 47 J 43/042**

(30) Priority: **22.12.87 IT 4017187**

(43) Date of publication of application:
**28.06.89 Bulletin 89/26**

(84) Designated Contracting States:
**AT BE CH DE ES FR GB GR IT LI LU NL SE**

(71) Applicant: **Guaraldi, Leonardo**
**Via Riga 72**
**Renazzo (Ferrara) (IT)**

(72) Inventor: **Guaraldi, Leonardo**
**Via Riga 72**
**Renazzo (Ferrara) (IT)**

(74) Representative: **Fiammenghi-Domenighetti, Delfina et al**
**Fiammenghi-Fiammenghi Via Quattro Fontane 31**
**I-00184 Roma (IT)**

(54) **Mechanical shaking apparatus for shakers.**

(57) A mechanical shaking apparatus for shakers is comprised of a container (4) of the shaker, electromagnetic means (1) imparting said container an alternative motion or a helical motion upwards and downwards, and control means of said electromagnetic means. In both cases a reduction gear transfers said motion to a vertically slideable bottle container (4) by means of a crank mechanism (2, 3). In order to provide the alternative motion the bottle container is integral with slidable support member. In order to provide the helical motion the bottle container is slideable within a fixed support member (5): between bottle container and support member a pair of opposite roller cams are provided.

*FIG. 1*

EP 0 322 377 A1

# Description

## MECHANICAL SHAKING APPARATUS FOR SHAKERS

This invention relates to an apparatus holding and shaking the socalled shakers either used to manually mix the cocktails' ingredients or to shake coffee (mixing and cooling sugared or not sugared coffee with ice) and other drinks as well.

At the present state of art there is no mechanical apparatus used to this purpose. The shaking of coffee and cocktails is currently carried out by hand. The aim of this invention is to provide a mechanical apparatus having as main function the shaking of coffee and as secondary function the shaking of cocktails as well as the mixing of any other drink (cold or warm drink) requiring two or more ingredients to be shaken.

According to the invention, as claimed in claims 1 and 3, this aim is achieved by means of an apparatus comprising a container in which the shaker is placed, suitable motor means imparting said container an alternative motion or a periodic helical motion in order to shake and mix the ingredients contained in the shaker at a given speed and for a predetermined period of time.

Good results are achieved when:
- the obtained mixture is homogeneous;
- the desired temperature is uniform;
- the quality is constantly the same;
- the operation of the apparatus is very quick.

Such results are assured by the mechanical apparatus according to this invention.

These and other features and advantages of the invention will be more readily apparent from the following description with reference to the annexed drawing provided by way of non-limitative example, wherein:

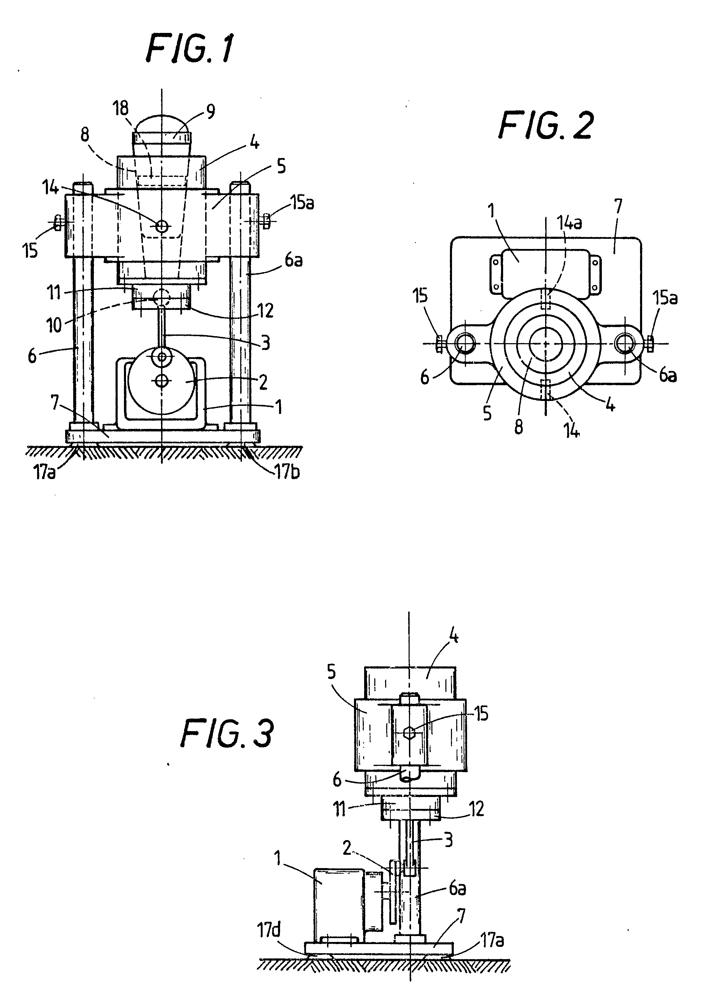

Figs.1: is an elevation view of a first embodiment of the apparatus according to the invention;

Fig.2: is a plan view of the apparatus of Fig.1;

Fig.3: is a side view of the apparatus of Fig.1;

Fig.4: shows the shaker container of the apparatus with coaxial bore;

Fig.5: is a section along the line A-A of Fig.4;

Fig.6: shows an alternative embodiment of the shaker container with inclined bore;

Fig.7: is a top plan view of the shaker container of Fig.6.

Fig.8: is an elevation view of another simplified embodiment of the apparatus according to the invention.

With reference to the drawing, where the same numerals designate the same parts in the different embodiments, a reduction gear indicated at 1 is provided on its shaft with a cam 2 acting as a crank having the shape of a disc which controls a connecting rod 3. The connecting rod 3 imparts an alternative motion to a sleeve 4 which is guided so as to slide with a wide clearance within a tubular member 5. The tubular member, besides the central bore, is provided with two further bores parallel thereto, in which two respective posts 6, 6a are slideable, which are integral with a base 7, on which the reduction gear 1 is also mounted.

Base 7 rests on the working plane by means of suction cups 17a, b, c, d.

Sleeve 4 has a frusto-conical bore 8 in which shaker 9 is introduced. Shaker 9 is held by gravity within said bore 8 and is locked by friction by an elastic strip 18.

The connecting rod 3 is connected to sleeve 4 at its spheric end 10 pivoted between caps 11, 12 (cap 12 is connected to cap 11 by screws; cap 11 is connected to sleeve 4) in which semispheric seats housing the head 10 of the connecting rod 3 are provided.

Sinusoidal groovers 13, 13a, which can also have different form, are provided on the periphery of sleeve 4 in opposite positions. Bolts 14, 14a integral with the tubular member 5 can engage said grooves, for example, by screwing if said bolts 14, 14a are threaded. The tubular guide member 5 can be secured to the posts 6, 6a by screws 15, 15a with such an arrangement, if the tubular member 5 is secured to posts 6, 6a the rotation of the crank mechanism 2, 3 causes an alternative motion along with a rotation of sleeve 4, in the sinusoidal grooves 13, 13a of which acting as roller cams the cam followers formed by bolts 14, 14a are received.

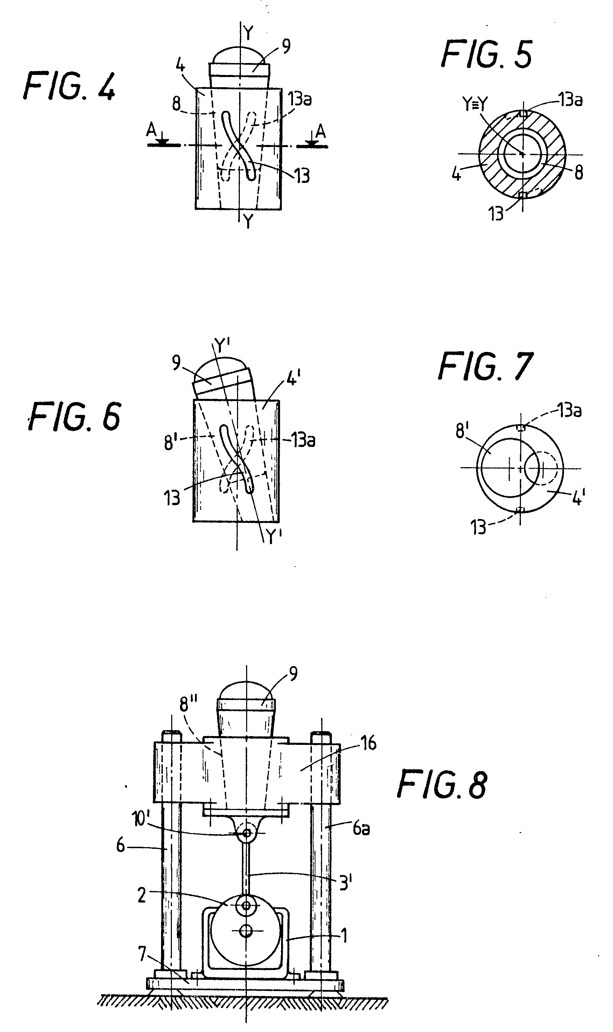

If the tubular member 5 is not secured to posts 6, 6a by screws 15, 15a and bolts 14, 14a by further screwing make sleeve 4 integral with the tubular member 5, the motion of sleeve 4 is only alternative. Bore 8 of sleeve 4 has the function of receiving shaker 9 and can be either formed with axis y-y parallel to or coincident with the axis of the sleeve, as shown in Figs. 4, 5 or with axis y'-y' inclined as indicated at 8' in the sleeve 4' of Figs. 6, 7. The purpose of imparting two simultaneous motions to sleeve 4, 4' provided with a bore to contain shaker 9 is to provide a more effective mixing of the shaker content (and a more similar motion as the manual shaking) and to obtain a more uniform product as far as mixing and temperature are concerned in a shorter time than it can be provided both manually and by an alternative motion. Fig.8 shows a simplified solution of the device, in which the reduction gear 1 and the crank mechanism 2, 3' move alternatively a slideable support member 16 guided on the posts 6, 6a. Support member 16 is formed of the tubular member 5 and sleeve 4 integral to each other in one-piece configuration. Support member 16 is connected to the connecting rod 3' at 10'. Bore 8" containing the shaker 9 can have also in this case an axis parallel or inclined to the axis of the posts 6, 6a.

As far as the electrical control of both embodiment is concerned, it is not illustrated, as it is known, and can be comprised of a switch and a timer so that the apparatus is started by a starting button and is automatically stopped after the time set in the timer is elapsed. In the described apparatus a speed variator can be provided which allows the number of alternative cycles to by suitable chosen as a function of the drink, the cocktail, egg-flip, milk-shake and soft ice-cream. The simultaneous motions imparted to the shaker and the timing of the operation assure a uniform product of constant quality to be provided.

Many modifications can be made to the described embodiment. Thus, a shaking apparatus according to the invention can be provided with any other known motor means adapted to impart a simple alternative motion or a combination of the latter with rotation. Further the support member of the shaker can be designed to allow the setting of the inclination of the shaker with respect to the axis of the shaker container.

Moreover a shaker container can be provided which is able to contain several shakers so as to reduce the time of mixing drinks.

## Claims

1. Mechanical shaking apparatus for shakers having the function of shaking the socalled shakers in order to provide cocktails, mixed coffee or other cold and warm drinks, characterized by:
- a container for the shaker;
- electromagnetic means adapted to impart an alternative motion upwards and downwards to said container;
- control means for said electromagnetic means.

2. Mechanical shaking apparatus according to claim 1, characterized in that said electromagnetic means is comprised of a reduction gear (1), a crank mechanism (2,3'), the crank (2) being mounted on the output shaft of the reduction gear (1) and the connecting rod(3') being pivoted at a support member (16) of a shaker (9), said support member (16) being slideable on vertical posts (6,6a) mounted on a base (7) to which the reduction gear is secured.

3. Mechanical shaking apparatus for shakers having the function of shaking the socalled shakers in order to provide cocktails, mixed coffee or other cold and warm drinks, characterized by:
- a container for the shaker;
- electromagnetic means adapted to impart a periodic helical motion to said container;
- control means for said electromagnetic means adapted to impart the container and the shaker a combined alternative and rotating motion downwards and upwards in clockwise and anti-clockwise direction.

4. Mechanical shaking apparatus according to claim 3, characterized in that said electromagnetic means is comprised of a reduction gear (1), a crank mechanism (2, 3), the crank (2) being mounted on the output shaft of the reduction gear (1) and the connecting rod (3) being connected by spherical coupling (10, 11, 12) to a cylindrical sleeve (4, 4') containing the shaker, said cylindrical sleeve being slideable within a tubular guide member (5) which is laterally secured to vertical posts (6, 6a) and is provided with a pair of radial bolts (14, 14a) diametrally opposed and protruding inwards into opposite sinusoidal grooves (13, 13a) formed in the periphery of the cylindrical sleeve (4, 4').

5. Mechanical shaking apparatus according to any preceding claims, characterized in that the container of the shaker is provided with a substantially frusto-conical coaxial bore provided with a peripheral strip (18) holding by friction the shaker (9).

6. Mechanical shaking apparatus according to any claims 1 to 4, characterized in that the shaker container is provided with a substantially frusto-conical bore having an inclined axis with respect to the axis of the container and provided with peripheral strip (18) holding by friction the shaker (9).

7. Mechanical shaking apparatus according to claims 1 to 4, characterized in that said control means is comprised of a control circuit for the electrical motor of the reduction gear which can be power - or battery - supplied and includes a main switch, a timer, a starting swith and a speed variator for the electrical motor.

*FIG.1*

*FIG.2*

*FIG.3*

FIG. 4

FIG. 5

FIG. 6

FIG. 7

FIG. 8

# DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | US-A-2029234 (HELMES)<br>* the whole document * | 1, 2, 4, 5, 7 | A47J43/042 |
| X | US-A-2146860 (SHAW)<br>* the whole document * | 1, 2, 4, 7 | |
| X | US-A-1527227 (SANDERS)<br>* the whole document * | 1, 2 | |
| X | US-A-3208733 (MAC. DONALD)<br>* the whole document * | 1, 3 | |
| X | US-A-3030082 (MATZEN ET AL)<br>* the whole document * | 1 | |

TECHNICAL FIELDS SEARCHED (Int. Cl.4 )

A47J

The present search report has been drawn up for all claims

| Place of search | Date of completion of the search | Examiner |
|---|---|---|
| THE HAGUE | 16 MARCH 1989 | SCHARTZ J. |